# EUROPÄISCHE PATENTSCHRIFT

(11) **EP 3 747 698 B1**
(45) Veröffentlichungstag und Bekanntmachung des Hinweises auf die Patenterteilung: **07.06.2023**
(21) Anmeldenummer: 20177813.1
(22) Anmeldetag: 02.06.2020
(51) Int. Cl.: B60P 7/08

(54) **BEWEGLICHE ZURRVORRICHTUNG, FAHRZEUG MIT EINER SOLCHEN ZURRVORRICHTUNG UND VERWENDUNG EINES AUFLAGEELEMENTS ZUR BILDUNG EINER SOLCHEN ZURRVORRICHTUNG**
MOBILE LASHING DEVICE, VEHICLE WITH SUCH A LASHING DEVICE AND USE OF A SUPPORT ELEMENT TO FORM SUCH A LASHING DEVICE
DISPOSITIF D'ARRIMAGE MOBILE, VÉHICULE DOTÉ D'UN TEL DISPOSITIF D'ARRIMAGE ET UTILISATION D'UN ÉLÉMENT DE SUPPORT POUR FORMER UN TEL DISPOSITIF D'ARRIMAGE

(30) Priorität: 07.06.2019 DE 102019115534
(43) Veröffentlichungstag der Anmeldung: 09.12.2020
(73) Patentinhaber: Humbaur GmbH, 86368 Gersthofen (DE)
(72) Erfinder: Schmid, Rainer, 86672 Thierhaupten (DE)
(74) Vertreter: Meissner Bolte Partnerschaft mbB

(56) Entgegenhaltungen:
- CN-A- 106 394 387
- DE-A1- 19 806 448
- US-B1- 9 511 705

## Beschreibung

Die Erfindung betrifft ein Fahrzeug mit einer beweglichen Zurrvorrichtung gemäß dem Oberbegriff des Patentanspruchs 1. Eine bewegliche Zurrvorrichtung für ein solches Fahrzeug ist beispielsweise aus DE 20 2013 100 042 U1 bekannt.

Im Allgemeinen werden Zurrvorrichtungen genutzt, um Ladung auf einem Fahrzeug zu sichern. Dazu sind derartige Zurrvorrichtung vorzugweise am Fahrzeug selbst, beispielsweise an der Ladefläche, befestigt. In die Zurrvorrichtungen können dann Spanneinrichtungen, beispielsweise Spanngurte oder Spannketten, eingehakt werden, um so eine Ladung fest mit dem Fahrzeug zu verzurren.

DE 20 2013 100 042 U1 beschreibt eine Zurrvorrichtung mit einem Zurrbügel als Kernelement, der zumindest teilweise mit einem Kunststoffmaterial ummantelt ist. Das Kunststoffmaterial bildet insoweit ein Auflageelement, welches verhindern soll, dass die Zurrvorrichtung in der versenkten Position am Fahrzeug klappert. Diese Gestaltung der Zurrvorrichtung hat jedoch mehrere Nachteile. Einerseits ist der Herstellungsprozess relativ aufwendig, da das Kernelement in ein entsprechendes Werkzeug zunächst eingespannt werden muss, bevor die Ummantelung, beispielsweise durch Spritzgießen erzeugt werden kann. Der Einspannvorgang muss entsprechend präzise erfolgen und ist zeitaufwändig. Andererseits hat sich gezeigt, dass durch das Einhaken von Spanneinrichtungen in die Spannvorrichtung das das Kernelement ummantelnde Kunststoffmaterial schnell verschleißt. Insbesondere die auf die Spanneinrichtung aufgebrachte Spannkraft wirkt direkt auf das Kunststoffmaterial und führt so oft zu einer Beschädigung der Ummantelung, so dass diese ihre geräuschmindernde Funktion nicht mehr dauerhaft beibehält.

Aus EP 3 115 254 A1 ist eine weitere Zurrvorrichtung beschrieben, die im Wesentlichen einen ähnlichen Aufbau wie die Zurrvorrichtung gemäß DE 20 2013 100 042 U1 aufweist. Insbesondere umfasst die Zurrvorrichtung ein als Zurrbügel ausgebildetes Kernmaterial und eine teilweise Ummantelung, die als Auflageelement dient. Gemeinsam ist den Zurrvorrichtungen gemäß DE 20 2013 100 042 U1 und EP 3 115 254 A1, dass die Zurrvorrichtung im Wesentlichen U-förmig ausgebildet ist, im Bereich des die Schenkel des U-förmigen Kernelements bzw. Zurrbügels verbindenden Stegs jedoch seitliche Griffabschnitte vorgesehen sind, die es einem Nutzer ermöglichen, den versenkten Zurrbügel einfach zu greifen und so von einer Ruhestellung in eine Benutzungsstellung zu überführen.

Eine ähnliche Form einer Zurrvorrichtung zeigt auch DE 20 2018 102 359 U1, wobei bei dieser Zurreinrichtung keine Ummantelung zur Reduktion von Geräuschen vorgesehen ist. Das Problem, dass die Zurrvorrichtung im versenkten Ruhezustand klappert, wird bei der Zurrvorrichtung gemäß DE 20 2018 102 359 U1 dadurch gelöst, dass die Schenkel der Zurrvorrichtung in Federn geführt sind, die die Zurrvorrichtung in die Ruhestellung vorspannen. Diese Konstruktion erschwert die Überführung der Zurrvorrichtung in die Benutzungsstellung und erhöht wegen der Vielzahl von Bauteilen die Kosten für die Zurrvorrichtung.

DE 198 06 448 A1 beschreibt eine Zurrvorrichtung gemäß dem Oberbegriff des Patentanspruchs 1 mit einem U-förmigen Zurrbügel und einer Anschlagplatte, die sich zwischen Schenkeln des Zurrbügels erstreckt. Im Einbauzustand in einem Fahrzeug erstrecken sich die Schenkel durch ein Öffnungen in einem Rahmenbauteil des Fahrzeugs. Die Anschlagplatte ist mit Muttern ortsfest fixiert und schließt den Zurrbügel unter dem Rahmenbauteil des Fahrzeugs ab, so dass sich der Zurrbügel nicht vollständig aus Öffnungen des Rahmenbauteils entfernen lässt.

Aus US 9,511,705 B1 ist ein Zurrbügel für einen PKW-Kofferraum bekannt, der eine Kunststoffplatte zur Befestigung des Zurrbügels in einem Kofferraumboden aufweist. Zum Einbauen des Zurrbügels wird die Kunststoffplatte fest in einer Öffnung des Kofferraumbodens verankert. Der Zurrbügel ist durch Öffnungen in der Kunststoffplatte beweglich und kann zum Verzurren von Ladegütern aus dem Kofferraumboden hervorgezogen werden.

Aufgabe der Erfindung ist es, ein Fahrzeug mit einer kostengünstigen Zurrvorrichtung anzugeben, die einerseits einem geringen Verschleiß unterliegt und andererseits eine ausreichende Reduktion von Schallemissionen im Ruhezustand, beispielsweise durch Klappern, verhindert.

Erfindungsgemäß wird diese Aufgabe im Hinblick auf die beweglich Zurrvorrichtung durch den Gegenstand des Patentanspruchs 1 gelöst..

So beruht die Erfindung auf dem Gedanken, ein Fahrzeug mit einer beweglichen Zurrvorrichtung umfassend einen zumindest abschnittsweise U-förmigen Zurrbügel anzugeben, wobei der Zurrbügel zwei Schenkel und einen die Schenkel verbindenden Steg aufweist. Ferner umfasst die bewegliche Zurrvorrichtung ein Auflageelement, das sich zwischen den Schenkeln erstreckt. Erfindungsgemäß ist vorgesehen, dass das Auflageelement verschiebbar mit dem Schenkel verbunden derart, dass ein Abstand zwischen dem Steg und dem Auflageelement veränderbar ist.

Die vorliegende Erfindung umfasst ein Fahrzeug, insbesondere einen Anhänger, insbesondere Kraftfahrzeuganhänger, mit der zuvor beschriebenen beweglichen Zurrvorrichtung. Das Fahrzeug weist Aufnahmeöffnungen auf, durch die die Schenkel des Zurrbügels hindurchgeführt sind. Das Auflageelement ist zwischen den Aufnahmeöffnungen und dem Steg des Zurrbügels angeordnet.

Die vorliegende Erfindung geht also vom Stand der Technik insoweit weg, als auf eine Ummantelung des Zurrbügels mit einem Kunststoffmaterial verzichtet wird. Vielmehr wird ein separates Auflageelement bereitgestellt, dass sich mit dem Zurrbügel verbinden lässt bzw. mit dem Zurrbügel verbunden ist. Dabei soll gewährleistet bleiben, dass sich das Auflageelement entlang des Zurrbügels verschieben lässt, so dass zwischen dem Steg des Zurrbügels und dem Auflageelement ein Abstand einstellbar ist.

Auf diese Weise wird erreicht, dass bei Benutzung der Zurrvorrichtung ein Nutzer die Spanneinrichtung nicht zwingend mit dem Auflageelement verbinden muss, sondern das Auflageelement von dem Steg des Zurrbügels wegschieben und die Spanneinrichtung direkt in den Zurrbügel einhaken kann. Das Auflageelement unterliegt so keinem Verschleiß infolge der Spannung, die auf die Spanneinrichtung zur Sicherung des Ladeguts aufgebracht wird. Ein weiterer Vorteil der Erfindung besteht darin, dass durch das Auflageelement die Möglichkeit geschaffen wird, bestehende Zurrbügel nachzurüsten und so nachträglich eine geräuschdämmende Zurrvorrichtung zu schaffen.

In diesem Zusammenhang wird darauf hingewiesen, dass der Zurrbügel bei der hier beschriebenen Zurrvorrichtung nicht zwingend vollständig U-förmig ausgebildet sein muss. Es ist auch möglich, dass der Zurrbügel lediglich abschnittsweise U-förmig ausgebildet ist. Insgesamt kann der Zurrbügel beispielsweise geschlossen sein, insbesondere O-förmig geschlossen sein. Im Hinblick auf die Nachrüstbarkeit von Fahrzeugen hat sich jedoch eine U-förmige Gestaltung des Zurrbügels als besonders vorteilhaft erwiesen.

Bei einer bevorzugten Ausführungsform der Erfindung ist vorgesehen, dass das Auflageelement zwei Durchgangsöffnungen aufweist, durch die sich jeweils ein Schenkel erstreckt. Mit den Durchgangsöffnungen ist es möglich, das Auflageelement einerseits mit den Schenkeln zu verbinden und andererseits die Verschiebbarkeit des Auflageelements zu gewährleisten. Insbesondere kann das Auflageelement so verschoben werden, dass ein Abstand zwischen dem Steg und dem Auflageelement veränderbar ist. Dabei ist nicht ausgeschlossen, dass der Abstand zwischen dem Steg und dem Auflageelement auch Null beträgt.

Das Auflageelement weist vorzugsweise eine Breite auf, die wenigstens der Breite des Stegs entspricht. So ist sichergestellt, dass im Ruhezustand bzw. im versenkten Zustand der Zurrvorrichtung der Steg nicht unmittelbar mit Bauteilen des Fahrzeugs in Kontakt gelangt. Ein Klappern des Zurrelements kann auf diese Weise vermieden werden.

Bei einer weiteren bevorzugten Ausführungsform des erfindungsgemäßen Fahrzeugs weist das Auflageelement eine längliche Ausnehmung zur Aufnahme des Stegs auf. Mit anderen Worten kann der Steg in das Auflageelement eintauchen bzw. teilweise von dem Auflageelement umgriffen werden. Dabei bleibt die Verschiebbarkeit des Auflageelements jedoch vorzugsweise erhalten.

Die längliche Ausnehmung verbindet vorzugsweise die Durchgangsöffnungen. Mit anderen Worten verläuft die Ausnehmung zwischen den Durchgangsöffnungen und geht unmittelbar in die Durchgangsöffnungen über.

Insbesondere kann vorgesehen sein, dass die Ausnehmung eine Tiefe aufweist, die wenigstens der Dicke des Stegs entspricht, so dass der Steg vollständig in die Ausnehmung versenkbar ist. Das hat den Vorteil, dass im Ruhezustand bzw. versenkten Zustand der Steg nicht über das Auflageelement vorsteht. Wenn das Auflageelement also derart in beispielsweise eine Ladefläche des Fahrzeugs versenkt ist, dass dessen Oberseite flächenbündig mit der Ladefläche ausgerichtet ist, dann wird durch das Versenken des Stegs erreicht, dass dieser ebenfalls unterhalb der flächenbündig ausgerichteten Oberseite des Auflageelements angeordnet ist. Somit wird eine vollständig ebene Ladefläche erreicht.

Um eine Schallemission infolge eines Klapperns bzw. einer Bewegung der Zurrvorrichtung im Ruhezustand weiter zu vermeiden oder zumindest zu reduzieren, ist bevorzugt vorgesehen, dass das Auflageelement eine Querschnittskontur aufweist, die an eine Kontur einer Vertiefung des Fahrzeugs angepasst ist. Beispielsweise kann im Fahrzeug eine U-förmige oder V-förmige Vertiefung ausgebildet sein, wobei das Auflageelement zumindest an seiner Unterseite eine entsprechende Formgebung aufweist, also insbesondere auch V-förmig oder U-förmig ausgebildet ist. Jedenfalls ist die Querschnittskontur bei dem Auflageelement vorzugsweise zumindest auf einer Unterseite korrespondierend bzw. komplementär zur Kontur der Vertiefung ausgebildet.

Für eine gute Aufnahme von Spannkräften zur Ladungssicherung ist es vorteilhaft, wenn der Zurrbügel aus einem gebogenen einstückigen Element gebildet ist. Der Zurrbügel ist also vorzugsweise ohne Verbindungsstellen ausgebildet. Damit wird vermieden, dass sich infolge von Produktionstoleranzen Sollbruchstellen in verschiedenen Zurrbügeln ergeben. Die einstückige Ausbildung erhöht somit die Produktionssicherheit und die vom Zurrbügel aufnehmbaren Kräfte. Besonders bevorzugt ist es, wenn der Zurrbügel aus einem einstückigen, gebogenen Metallelement gebildet ist. Beispielsweise kann der Zurrbügel durch Umbiegen eines Stahlstabes gebildet sein.

Der Zurrbügel, insbesondere das einstückige Element, weist vorzugsweise ein kreisförmiges Querschnittsprofil auf. Zwar ist es auch möglich, denn Zurrbügel durch ein mehreckiges Querschnittsprofil zu bilden. Zur Aufnahme von Zurrkräften und im Hinblick auf eine kostengünstige Herstellung hat sich ein kreisförmiges Querschnittsprofil jedoch als vorteilhaft erwiesen. So können insbesondere Standardrohlinge eines Stahls in Stabform zur Bildung des Zurrbügels verwendet werden.

Bei einer weiteren bevorzugten Ausführungsform des erfindungsgemäßen Fahrzeugs weisen die Schenkel des Zurrbügels jeweils einen Endabschnitt mit einem Außengewinde auf, dass sich bis zu einem freien Ende des jeweiligen Schenkels erstreckt. Mit dem Außengewinde ist es möglich, den Zurrbügel an einem Fahrzeug zu fixieren, beispielsweise durch Muttern bzw. Stoppmuttern, die auf das Außengewinde am freien Ende aufgeschraubt werden.

Es ist möglich, dass die Endabschnitte der Schenkel des Zurrbügels derart abgewinkelt sind, dass sich die Endabschnitte aus einer Ebene erheben, die durch die Schenkel und den Steg gebildet ist. Konkret liegen die Schenkel und der Steg also in einer Ebene, wobei die Endabschnitte der Schenkel so abgewinkelt sind, dass sie sich aus dieser Ebene heraus erheben, die freien Enden der Schenkel also außerhalb der soeben beschriebenen Ebene angeordnet sind.

Die Endabschnitte sind vorzugsweise zur selben Richtung und um denselben Winkel abgewinkelt. Auf diese Weise ergibt sich ein gekrümmter bzw. gebogener Zurrbügel, der in einer Benutzungsstellung bzw. Ausziehstellung schräg zu einem Ladeboden oder einer Bordwand des Fahrzeugs ausgerichtet sein kann. Insbesondere kann der Zurrbügel so in der Benutzungsstellung besser in die Spannrichtung ausgerichtet werden, wodurch sich die Kraftübertragung von der Spanneinrichtung auf das Fahrzeug verbessern lässt.

Ferner kann bei der Erfindung vorgesehen sein, dass die Endabschnitte oberhalb des Außengewindes jeweils wenigstens einen seitlichen Vorsprung aufweisen. Der Vorsprung kann beispielsweise einstückig mit den Endabschnitten ausgebildet sein. Insbesondere kann der Vorsprung durch Umformen der Endabschnitte gebildet sein. Eine bevorzugte Variante zum Umformen der Endabschnitte bzw. eines Teils der Endabschnitte ist durch einen Crimpvorgang gegeben, d.h. der seitliche Vorsprung, vorzugsweise zwei gegenüberliegende seitliche Vorsprünge an einem Endabschnitt, können durch Crimpen gebildet sein. Die seitlichen Vorsprünge an den Endabschnitten dienen als Anschläge für Muttern oder ein Halteblech, mit welchen verhindert werden kann, dass die Zurrvorrichtung aus einer entsprechenden Aufnahme am Fahrzeug herausgleitet.

Eine weitere bevorzugte Ausführungsform der Erfindung sieht vor, dass die Durchgangsöffnungen des Auflageelements jeweils eine seitliche Ausnehmung aufweisen, so dass das Auflageelement über die seitlichen Vorsprünge der Endabschnitte geschoben werden kann. Mit anderen Worten ist das Auflageelement vorzugsweise so angepasst, dass die seitlichen Vorsprünge am Zurrbügel nicht verhindern, dass das Auflageelement auf den Zurrbügel aufgeschoben wird. Auf diese Weise lässt sich das Auflageelement auch gut zur Nachrüstung bereits vorhandener Zurrbügel nutzen.

Um die Zurrvorrichtung insgesamt gut von ihrer Ruhestellung in eine Benutzungsstellung überführen zu können, ist es vorteilhaft, wenn das Auflageelement an seinen Längsenden über den Zurrbügel vorstehende Griffabschnitte bildet.

Ferner wird ein Auflageelement für eine zuvor beschriebene Zurrvorrichtung offenbart, wobei das Auflageelement zwei Durchgangsbohrungen zur Durchführung von Schenkeln des Zurrbügels aufweist. Bevorzugt ist es, wenn das Auflageelement die zuvor bereits genannten Merkmale und Eigenschaften aufweist.

Das zuvor beschriebene Auflageelement kann zum Nachrüsten von Zurrbügeln verwendet werden derart, dass eine zuvor beschriebene Zurrvorrichtung gebildet ist.

Bei der bevorzugten Variante des erfindungsgemäßen Fahrzeugs sind die Aufnahmeöffnungen in einer Vertiefung ausgebildet, wobei eine Querschnittskontur des Auflageelements an die Kontur der Vertiefung angepasst ist.

In einer Ruhestellung der Zurrvorrichtung kann das Auflageelement im Wesentlichen oberflächenbündig in die Vertiefung versenkt sein. Damit wird eine glatte Ladefläche in der Ruhestellung der Zurrvorrichtung bereitgestellt.

Bei einer weiteren Ausführungsform der Erfindung erstreckt sich der Zurrbügel durch einen Innenraum einer hohlen Bordwand, wobei der Steg des Zurrbügels an einer Innenseite der hohlen Bordwand und die Endabschnitte der Schenkel an einem Boden der hohlen Bordwand nach außen treten. Bei dieser Variante ist die Zurrvorrichtung vorzugsweise in eine hohle Bordwand integriert, so dass die Ladefläche des Fahrzeugs nicht von Zurreinrichtungen beeinträchtigt ist. Dies ist insbesondere für Fahrzeuge sinnvoll, bei welchen eine vollständige glatte und ebene Ladefläche relevant ist.

Vorzugsweise ist vorgesehen, dass die Vertiefung, in die das Auflageelement in der Ruhestellung vorzugsweise versenkt ist, in einer Ladefläche des Fahrzeugs oder an der Innenseite der hohlen Bordwand ausgebildet ist.

Die Erfindung wird im Folgenden anhand eines Ausführungsbeispiels unter Bezugnahme auf die beigefügten, schematischen Zeichnungen näher erläutert. Darin zeigen:
- Fig. 1:: eine isometrische Ansicht einer Zurrvorrichtung des erfindungsgemäßen Fahrzeugs nach einem bevorzugten Ausführungsbeispiel;
- Fig. 2:: eine Vorderansicht der Zurrvorrichtung gemäß Fig. 1;
- Fig. 3:: eine Seitenansicht der Zurrvorrichtung gemäß Fig. 1;
- Fig. 4:: eine Draufsicht einer Zurrvorrichtung gemäß Fig. 1;
- Fig. 5:: eine Untersicht der Zurrvorrichtung gemäß Fig. 1; und
- Fig. 6:: eine Querschnittsansicht der Zurrvorrichtung gemäß Fig. 1 entlang der Linie A-A in Fig. 5.

In den beigefügten Figuren ist ein bevorzugtes Ausführungsbeispiel einer beweglichen Zurrvorrichtung gezeigt, wobei die bewegliche Zurrvorrichtung aus zwei separaten Bauteilen, nämlich einem Zurrbügel 10 und einem Auflageelement 20 gebildet ist. Der Zurrbügel 10 ist vorzugsweise durch einen gebogenen Metallbügel gebildet. Das Auflageelement 20 kann aus einem Kunststoffmaterial, insbesondere aus einem Hartkunststoff, gebildet sein.

Der Zurrbügel 10 umfasst zwei Schenkel 11 und einen die Schenkel 11 verbindenden Steg 12. Der Steg 12 kann in einem mittleren, insbesondere geraden, Abschnitt eine geriffelte Außenoberfläche aufweisen.

Die Schenkel 11 umfassen jeweils einen Endabschnitt 13, der gegenüber den Schenkeln 11 abgewinkelt ist. Dabei erhebt sich der Endabschnitt 13 aus einer Ebene, die durch die Schenkel 11 und den Steg 12 aufgespannt wird. Die Endabschnitte 13 der beiden Schenkel 11 sind vorzugweise um denselben Winkel und in dieselbe Richtung abgewinkelt. Dies ermöglicht es, den Zurrbügel 10 gerade in beispielsweise einer Ladefläche eines Fahrzeugs zu versenken und in einer Benutzungsstellung schräg auszurichten.

Die Endabschnitte 13 umfassen jeweils ein Außengewinde 15, das sich von einem freien Ende 14 des jeweiligen Schenkels 11 entlang eines Teils des Endabschnitts 13 erstreckt. Vorzugsweise weist das Außengewinde 15 eine Länge auf, die höchstens der Hälfte der Länge des Endabschnitts 13 entspricht.

Oberhalb des Außengewindes 15 ist an dem jeweiligen Endabschnitt 13 ein seitlicher Vorsprung 16 ausgebildet. Konkret weist jeder Endabschnitt 13 zwei seitliche Vorsprünge 16 auf, die im Wesentlichen diametral gegenüberliegend angeordnet sind. Die seitlichen Vorsprünge 16 befinden sich zwischen einem Knickpunkt, an dem der Endabschnitt 13 aus der Schenkelebene ausgelenkt ist, und dem Außengewinde 15. Die seitlichen Vorsprünge 16 bilden im Wesentlichen einen Anschlag, der verhindert, dass eine Halteplatte, die von den freien Ende 14 auf den Zurrbügel 10 geschoben wird, entlang der gesamten Schenkel 11 verschiebbar ist.

Die seitlichen Vorsprünge 16 sind vorzugsweise durch ein Umformverfahren gebildet. Konkret können die seitlichen Vorsprünge 16 durch Crimpen der Endabschnitte 13 gebildet sein. Die seitlichen Vorsprünge 16 sind insbesondere einstückig am Zurrbügel 10 ausgebildet.

Das Auflageelement 20 bildet ein separates Bauteil, das auf den Zurrbügel 10 aufschiebbar ist. Dazu weist das Auflageelement 20 zwei Durchgangsöffnungen 21 auf, die einen Abstand zueinander aufweisen, der dem Abstand der Schenkel 11 zueinander entspricht. Die Durchgangsbohrungen 21 umfassen ferner jeweils zwei diametral gegenüberliegende seitliche Nuten 23, die es ermöglichen, dass das Auflageelement 20 über die seitlichen Vorsprünge 16 an den Endabschnitten 13 der Schenkel 11 geschoben werden können.

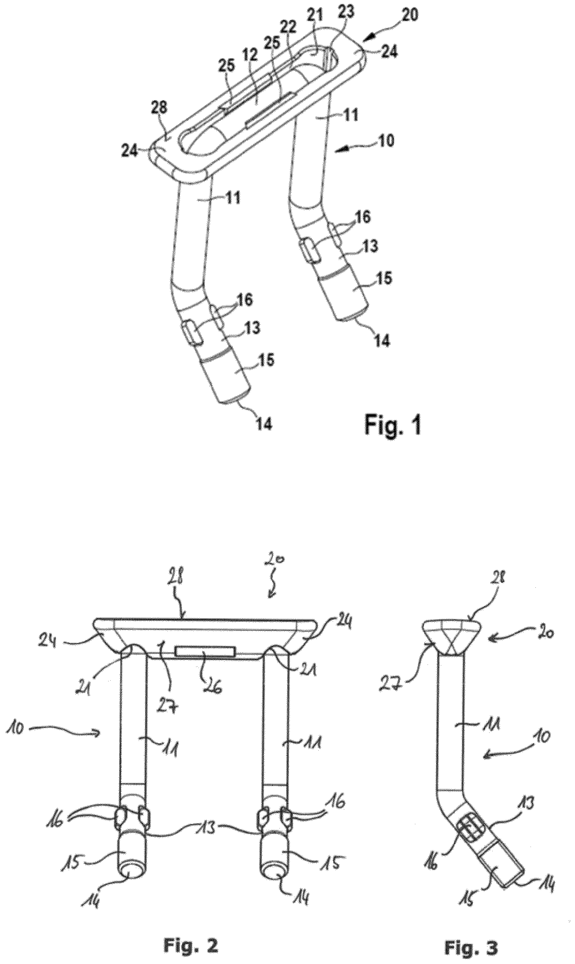

Wie in Fig. 1 gut erkennbar ist, umfasst das Auflageelement 20 eine längliche Ausnehmung 22, die an einer Oberseite 28 des Auflageelements 20 ausgebildet ist. Die längliche Ausnehmung 22 verbindet die beiden Durchgangsöffnungen 21. Die Tiefe der Ausnehmung 22 entspricht wenigstens der Dicke des Stegs 12, so dass der Steg 12 vollständig in das Auflageelement 20 versenkbar ist.

Um den Steg 12 in der versenkten Position innerhalb des Auflageelements 20 zu halten bzw. um das Auflageelement 20 in einer Position am Steg 12 zu halten, sind am Auflageelement 20 ferner zwei Rastvorsprünge 25 vorgesehen. Die Rastvorsprünge 25 erstrecken sich in einem mittleren Bereich der Ausnehmung 22 und ragen in die Ausnehmung 22 vor. Die Rastvorsprünge halten das Auflageelement 20 in der Position am Steg 12. Durch manuell aufzubringenden Kraftaufwand kann das Auflageelement 20 jedoch aus dieser Position gelöst und entlang der Schenkel 11 in Richtung der freien Enden 14 geschoben werden.

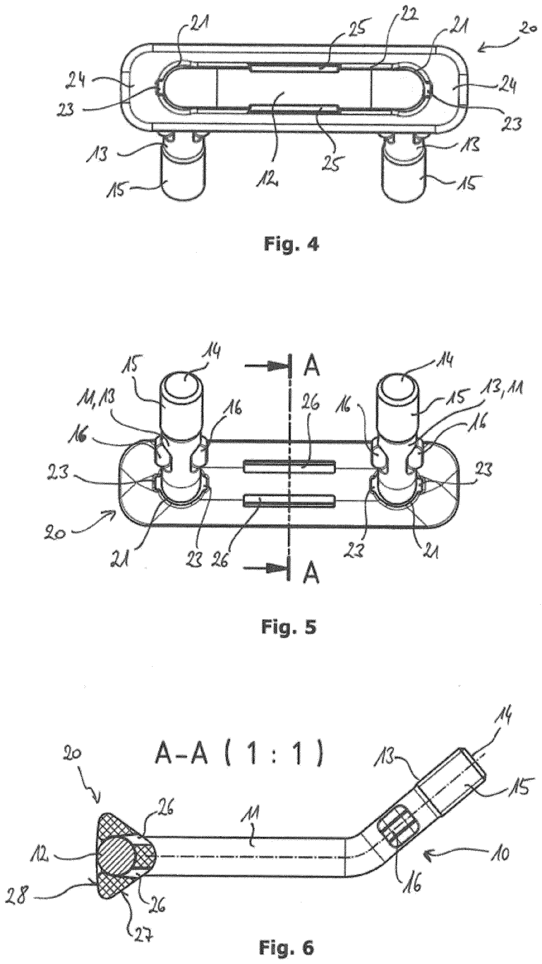

In den Figuren 3 und 6 ist gut erkennbar, dass das Auflageelement 20 ein Querschnittsprofil aufweist, welches an seiner Unterseite 27 eine Verjüngung bildet. Konkret weist das Auflageelement 20 eine im Wesentlichen V-förmige bzw. U-förmige Unterseite 27 auf. Die Unterseite 27 ist vorzugsweise an die Kontur einer Vertiefung angepasst, die in einem Fahrzeug ausgebildet ist. Dies ermöglicht einerseits eine Abdichtung von Aufnahmeöffnungen in einem Fahrzeug, die die Schenkel 11 des Zurrbügels 10 aufnehmen. Andererseits besteht durch diese Formgebung in einem versenkten Zustand der Zurrvorrichtung ein Formschluss zwischen dem Auflageelement 20 und der Vertiefung im Fahrzeug, so dass eine unerwünschte Bewegung, die mit Klappergeräuschen einhergehen kann, vermieden wird.

Um die Zurrvorrichtung aus einer derart versenkten Position in einer Vertiefung eines Fahrzeugs gut herausnehmen und in eine Benutzungsstellung überführen zu können, ist vorteilhaft vorgesehen, dass das Auflageelement 20 an seinen Längsenden über den Zurrbügel 10 vorsteht und Griffabschnitte 24 bildet. Die Griffabschnitte 24 sind in den Figuren 2 und 5 gut erkennbar. Vorzugsweise verläuft die Unterseite 27 des Auflageelements 20 auch an den Längsenden schräg, so dass das Auflageelement 20 gut an den Längsenden bzw. Griffabschnitten 24 manuell gegriffen und so die gesamte Zurrvorrichtung aus einer Vertiefung in einem Fahrzeug gezogen werden kann.

In den Figuren 2 und 5 ist außerdem erkennbar, dass an der Unterseite 27 des Auflageelements 20 Greifaussparungen 26 ausgebildet sind. Diese Greifaussparungen befinden sich vorzugsweise mittig zwischen den Durchgangsöffnungen 21. Mittels der Greifaussparungen 26 ist es möglich, das Auflageelement 20, das vorzugsweise im Spritzgussverfahren hergestellt wird, einfach aus einem Herstellwerkzeug, insbesondere einem Spritzgusswerkzeug, herauszulösen bzw. auszuwerfen.

Fig. 4 zeigt in der Draufsicht deutlich die längliche Ausnehmung 22, die in die Durchgangsöffnungen 21 übergeht. Außerdem sind die seitlichen Nuten 23 in den Durchgangsöffnungen 21 erkennbar. Dabei wird insbesondere aus Fig. 5 deutlich, dass die seitlichen Nuten 23 derart dimensioniert sind, dass sie es ermöglichen, das Auflageelement 20 über die seitlichen Vorsprünge 16 am Zurrbügel 10 hinweg zu schieben.

Fig. 6 zeigt eine Querschnittsansicht der Zurrvorrichtung, wobei deutlich erkennbar ist, dass der Steg 12 des Zurrbügels 10 vollständig unterhalb der Oberseite 28 des Auflageelements 20 positioniert ist, wenn der Steg 12 in die Ausnehmung 22 des Auflageelements 20 eintaucht. Damit wird eine ebene Oberfläche der Zurrvorrichtung gewährleistet, so dass der Zurrbügel 10 beim Versenken der Zurrvorrichtung in einer Vertiefung eines Fahrzeugs kein Hindernis darstellt.

### Bezugszeichenliste

- 10: Zurrbügel
- 11: Schenkel
- 12: Steg
- 13: Endabschnitt
- 14: Freies Ende
- 15: Außengewinde
- 16: seitlicher Vorsprung
- 20: Auflageelement
- 21: Durchgangsöffnung
- 22: Ausnehmung
- 23: seitliche Nut
- 24: Griffabschnitt
- 25: Rastvorsprung
- 26: Greifaussparung
- 27: Unterseite
- 28: Oberseite

## Patentansprüche

1. Fahrzeug mit einer beweglichen Zurrvorrichtung umfassend einen zumindest abschnittsweise U-förmigen Zurrbügel (10), der zwei Schenkel (11) und einen die Schenkel (11) verbindenden Steg (12) aufweist, und mit einem Auflageelement (20), das sich zwischen den Schenkeln (11) erstreckt, wobei das Fahrzeug Aufnahmeöffnungen aufweist, durch die die Schenkel (11) des Zurrbügels (10) hindurchgeführt sind, wobei das Auflageelement (20) verschiebbar mit den Schenkeln (11) verbunden ist derart, dass ein Abstand zwischen dem Steg (12) und dem Auflageelement (20) veränderbar ist,
**dadurch gekennzeichnet, dass**
das Auflageelement (20) zwischen den Aufnahmeöffnungen und dem Steg (12) des Zurrbügels (10) angeordnet ist.

2. Fahrzeug nach Anspruch 1,
**dadurch gekennzeichnet, dass**
das Auflageelement (20) zwei Durchgangsöffnungen (21) aufweist, durch die sich jeweils ein Schenkel (11) erstreckt.

3. Fahrzeug nach Anspruch 1 oder 2,
**dadurch gekennzeichnet, dass**
das Auflageelement (20) eine Breite aufweist, die wenigstens der Breite des Stegs (12) entspricht, und/oder dass das Auflageelement (20) eine Querschnittskontur aufweist, die an eine Kontur einer Vertiefung des Fahrzeugs angepasst ist, und/oder dass das Auflageelement (20) an seinen Längsenden über den Zurrbügel (10) vorstehende Griffabschnitte (24) bildet.

4. Fahrzeug nach einem der vorhergehenden Ansprüche,
**dadurch gekennzeichnet, dass**
das Auflageelement (20) eine längliche Ausnehmung (22) zur Aufnahme des Stegs (12) aufweist, wobei die Ausnehmung (22) vorzugsweise eine Tiefe aufweist, die wenigstens der Dicke des Stegs (12) entspricht derart, dass der Steg (12) vollständig in die Ausnehmung (22) versenkbar ist.

5. Fahrzeug nach einem der vorhergehenden Ansprüche,
**dadurch gekennzeichnet, dass**
das Auflageelement (20) als Kunststoffteil, insbesondere als einstückiges Kunststoffspritzgussteil, ausgebildet ist.

6. Fahrzeug nach einem der vorhergehenden Ansprüche,
**dadurch gekennzeichnet, dass**
der Zurrbügel (10) aus einem gebogenen, einstückigen Element, insbesondere Metallelement, gebildet ist, und/oder dass der Zurrbügel (10), insbesondere das einstückige Element, ein kreisförmiges Querschnittsprofil aufweist.

7. Fahrzeug nach einem der vorhergehenden Ansprüche,
**dadurch gekennzeichnet, dass**
die Schenkel (11) des Zurrbügels (10) jeweils einen Endabschnitt (13) mit einem Außengewinde (15) aufweisen, das sich bis zu einem freien Ende (14) des jeweiligen Schenkels (11) erstreckt.

8. Fahrzeug nach Anspruch 7,
**dadurch gekennzeichnet, dass**
die Endabschnitte (13) abgewinkelt sind derart, dass sich die Endabschnitte (13) aus einer Ebene erheben, die durch die Schenkel (11) und den Steg (12) gebildet ist.

9. Fahrzeug nach Anspruch 7 oder 8,
**dadurch gekennzeichnet, dass**
die Endabschnitte (13) oberhalb des Außengewindes (15) jeweils wenigstens einen seitlichen Vorsprung (16) aufweisen.

10. Fahrzeug nach Anspruch 2 und 9,
**dadurch gekennzeichnet, dass**
die Durchgangsöffnungen (21) des Auflageelements (20) jeweils eine seitliche Nut (23) aufweisen derart, dass das Auflageelement (20) über die seitlichen Vorsprünge (16) der Endabschnitte (13) geschoben werden kann.

11. Fahrzeug nach einem der vorhergehenden Ansprüche,
**dadurch gekennzeichnet, dass**
die Aufnahmeöffnungen in einer Vertiefung ausgebildet sind, wobei eine Querschnittskontur des Auflageelements (20) an die Kontur der Vertiefung angepasst ist.

12. Fahrzeug nach Anspruch 11,
**dadurch gekennzeichnet, dass**
die Vertiefung in einer Ladefläche des Fahrzeugs oder an der Innenseite einer hohlen Bordwand ausgebildet ist.

13. Fahrzeug nach Anspruch 11 oder 12,
**dadurch gekennzeichnet, dass**
das Auflageelement (20) in einer Ruhestellung der Zurrvorrichtung im Wesentlichen oberflächenbündig in die Vertiefung versenkt ist.

14. Fahrzeug nach einem der vorhergehenden Ansprüche,
**dadurch gekennzeichnet, dass**
sich der Zurrbügel (10) durch einen Innenraum einer hohlen Bordwand erstreckt, wobei der Steg (12) des Zurrbügels (10) an einer Innenseite der hohlen Bordwand und die Endabschnitte der Schenkel (11) an einem Boden der hohlen Bordwand nach außen treten.

## Claims

1. Vehicle with a movable lashing apparatus, comprising a lashing bracket (10), at least a section of which is U-shaped, which has two legs (11) and a crosspiece (12) connecting the legs (11), and with a bearing element (20) that extends between the legs (11), wherein the vehicle has receiving openings, through which the legs (11) of the lashing bracket (10) are passed, wherein the bearing element (20) is connected movably with the legs (11) in such manner that a distance between the crosspiece (12) and the bearing element (20) can be changed,
**characterized in that**
the bearing element (20) is arranged between the receiving openings and the crosspiece (12) of the lashing bracket (10).

2. Vehicle according to Claim 1,
**characterized in that**
the bearing element (20) has two passthrough openings (21), and one leg (11) extends through each opening.

3. Vehicle according to Claim 1 or 2,
**characterized in that**
the bearing element (20) has a width that is at least equal to the width of the crosspiece (12), and/or that the bearing element (20) has a cross-sectional profile that is adapted to match a contour of a depression in the vehicle, and/or that the longitudinal ends of the bearing element (20) form gripping sections (24) which protrude beyond the lashing bracket (10).

4. Vehicle according to any one of the preceding claims,
**characterized in that**
the bearing element (20) has an elongated recess (22) for accommodating the crosspiece (12), wherein the recess (22) preferably has a depth which is at least equal to the thickness of the crosspiece (12), in such manner that the crosspiece (12) can be completely sunk into the recess (22).

5. Vehicle according to any one of the preceding claims,
**characterized in that**
the bearing element (20) is designed as a plastic part, in particular as a monobloc injection moulded plastic part.

6. Vehicle according to any one of the preceding claims,
**characterized in that**
the lashing bracket (10) is constructed from a curved, single-part element, in particular a metal element, and/or that the lashing bracket (10), in particular the single-part element, has a circular cross-sectional profile.

7. Vehicle according to any one of the preceding claims,
**characterized in that**
the legs (11) of the lashing bracket (10) each have an end section (13) with an external thread (15) which extends as far as a free end (14) of the respective leg (11).

8. Vehicle according to Claim 7,
**characterized in that**
the end sections (13) are angled in such manner that the end sections (13) are raised out of a plane that is formed by the legs (11) and the crosspiece (12).

9. Vehicle according to Claim 7 or 8,
**characterized in that**
the end sections (13) each have at least one lateral protrusion (16) above the external thread (15).

10. Vehicle according to Claim 2 and 9,
**characterized in that**
the passthrough openings (21) of the bearing element (20) each have a lateral groove (23), in such manner that the bearing element (20) can be pushed over the lateral protrusions (16) of the end sections (13).

11. Vehicle according to any one of the preceding claims,
**characterized in that**
the receiving openings are formed in a depression, wherein a cross-sectional profile of the bearing element (20) is adapted to match the contour of the depression.

12. Vehicle according to Claim 11,
**characterized in that**
the depression is formed in a loading area of the vehicle or on the inside of a hollow tailboard.

13. Vehicle according to Claim 11 or 12,
**characterized in that**
when the lashing apparatus is in a neutral position the bearing element (20) is sunk into the depression substantially flush with the surface.

14. Vehicle according to any one of the preceding claims,
**characterized in that**
the lashing bracket (10) extends through an inner cavity of a hollow tailboard, wherein the crosspiece (12) of the lashing bracket (10) extends outward on an inner side of the hollow tailboard and the end sections of the legs (11) extend outward on a floor of the hollow tailboard.

## Revendications

1. Véhicule avec un dispositif d'arrimage mobile comprenant un étrier d'arrimage (10) au moins par endroits en forme de U, qui comporte deux branches (11) et une barrette de liaison (12) reliant les branches (11) et avec un élément de support (20), qui s'étend entre les branches (11), sachant que le véhicule comporte des ouvertures de logement à travers lesquelles sont passées les branches (11) de l'étrier d'arrimage (10), sachant que l'élément de support (20) est relié pouvant se déplacer aux branches (11) de telle manière qu'un intervalle entre la barrette de liaison (12) et l'élément de support (20) peut être modifié,
**caractérisé en ce que**
l'élément de support (20) est disposé entre les ouvertures de logement et la barrette de liaison (12) de l'étrier d'arrimage (10).

2. Véhicule selon la revendication 1,
**caractérisé en ce que**
l'élément de support (20) comporte deux ouvertures de passage (21) à travers lesquelles s'étend respectivement une branche (11).

3. Véhicule selon la revendication 1 ou 2,
**caractérisé en ce que**
l'élément de support (20) comporte une largeur, qui correspond au moins à la largeur de la barrette de liaison (12) et/ou **en ce que** l'élément de support (20) comporte un profil de section qui est adapté à un profil d'une cavité du véhicule et/ou **en ce que** l'élément de support (20) forme des sections de préhension (24) sur ses extrémités longitudinales, faisant saillie au-dessus de l'étrier d'arrimage (10).

4. Véhicule selon l'une quelconque des revendications précédentes,
**caractérisé en ce que**
l'élément de support (20) comporte un évidement longitudinal (22) pour recevoir la barrette de liaison (12), sachant que l'évidement (22) comporte de préférence une profondeur, qui correspond au moins à l'épaisseur de la barrette de liaison (12) de telle manière que la barrette de liaison (12) peut être complètement noyée dans l'évidement (22).

5. Véhicule selon l'une quelconque des revendications précédentes,
**caractérisé en ce que**
l'élément de support (20) est constitué sous la forme d'une pièce en matière plastique, en particulier d'une pièce monobloc en matière plastique moulée par injection.

6. Véhicule selon l'une quelconque des revendications précédentes
**caractérisé en ce que**
l'étrier d'arrimage (10) est formé par un élément plié, en une seule pièce, en particulier un élément métallique et/ou **en ce que** l'étrier d'arrimage (10), en particulier l'élément en une pièce, comporte un profil de section de forme circulaire.

7. Véhicule selon l'une quelconque des revendications précédentes,
**caractérisé en ce que**
les branches (11) de l'étrier d'arrimage (10) comportent respectivement une section d'extrémité (13) avec un filetage extérieur (15), qui s'étend jusqu'à une extrémité libre (14) de la branche respective (11) .

8. Véhicule selon la revendication 7,
**caractérisé en ce que**
les sections d'extrémités (13) sont coudées de telle manière que les sections d'extrémités (13) s'élèvent d'un plan, qui est formé par les branches (11) et la barrette de liaison (12).

9. Véhicule selon la revendication 7 ou 8,
**caractérisé en ce que**
les sections d'extrémités (13) comportent respectivement au moins une saillie latérale (16) au-dessus du filetage extérieur (15).

10. Véhicule selon les revendications 2 et 9,
**caractérisé en ce que**
les ouvertures de passage (21) de l'élément de support (20) comportent respectivement une rainure latérale (23) de telle sorte que l'élément de support (20) peut être déplacé sur les saillies latérales (16) des sections d'extrémités (13).

11. Véhicule selon l'une quelconque des revendications précédentes,
**caractérisé en ce que**
les ouvertures de logement sont constitués dans une cavité, sachant qu'un profil de section de l'élément de support (20) est adapté au profil de la cavité.

12. Véhicule selon la revendication 11,
**caractérisé en ce que**
la cavité est constituée dans une surface de charge du véhicule ou sur le côté intérieur d'une paroi de bordure creuse.

13. Véhicule selon la revendication 11 ou 12,
**caractérisé en ce que**
l'élément de support (20) est noyé affleurant à la surface dans la cavité dans une position de repos du dispositif d'arrimage pour l'essentiel.

14. Véhicule selon l'une quelconque des revendications précédentes,
**caractérisé en ce que**
l'étrier d'arrimage (10) s'étend à travers un espace intérieur d'une paroi de bordure creuse, sachant que la barrette de liaison (12) de l'étrier d'arrimage (10) passe vers l'extérieur sur un côté intérieur de la paroi de bordure creuse et les sections d'extrémités des branches (11) passent vers l'extérieur sur un fond de la paroi de bordure creuse.
